# EUROPÄISCHE PATENTSCHRIFT

(11) **EP 2 330 326 B1**
(45) Veröffentlichungstag und Bekanntmachung des Hinweises auf die Patenterteilung: **18.06.2014**
(21) Anmeldenummer: 10191019.8
(22) Anmeldetag: 12.11.2010
(51) Int. Cl.: F16L 13/14, F16L 33/207

(54) **Rohrförmiges Bauteil**
Tubular component
Composant tubulaire

(30) Priorität: 07.12.2009 DE 102009056975
(43) Veröffentlichungstag der Anmeldung: 08.06.2011
(73) Patentinhaber: VIEGA GmbH & Co. KG, 57439 Attendorn (DE)
(72) Erfinder: Steinhanses, Nadine, 57368, Lennestadt (DE); Müller, Christian, 57368, Lennestadt (DE); Meissner, Kai-Michael, 57223, Kreuztal (DE)
(74) Vertreter: Cohausz & Florack

(56) Entgegenhaltungen:
- EP-A1- 1 265 019
- EP-A1- 1 775 507
- EP-A1- 1 930 640

## Beschreibung

Die Erfindung betrifft ein rohrförmiges Bauteil mit einem ein Profil aufweisenden Endstück, wobei das Profil eine Mehrzahl axial in Längsrichtung des Endstücks versetzter Halteelemente aufweist, wobei die Halteelemente mindestens einen ersten azimutalen Konturbereich und mindestens einen zweiten azimutalen Konturbereich aufweisen und wobei die Außenkontur eines Halteelements im ersten Konturbereich mindestens abschnittsweise gegenüber dem zweiten Konturbereich erniedrigt oder erhöht ist.

Rohrförmige Bauteile werden im Stand der Technik vorzugsweise als Rohrverbinder zur Verbindung von Rohren durch Verpressen eingesetzt. Dabei wird ein Rohr über das Endstück eines rohrförmigen Bauteils geschoben und dann mit diesem, vorzugsweise unter Verwendung einer Presshülse, verpresst. Die axial in Längsrichtung des Endstücks versetzten Halteelemente verhindern dabei im verpressten Zustand eine axiale Relativbewegung zwischen dem Rohr und dem rohrförmigen Bauteil. Weiterhin sorgen diese Halteelemente für eine zuverlässig dichte Verbindung. Bei der Installation derartiger rohrförmiger Bauteile kann es vorkommen, dass das rohrförmige Bauteil mit dem darauf aufgeschobenen Rohr bereits im unverpressten Zustand schon so gut abdichtet, dass bei einer Prüfung der Installation, bei der Flüssigkeit durch das Rohrsystem geleitet wird, keine Flüssigkeit aus der unverpressten Verbindung von Rohr und rohrförmigem Bauteil austritt, so dass der Installateur den unverpressten Zustand nicht bemerkt. Da sowohl Rohrverbinder als auch Rohre gewissen Größentoleranzen unterliegen, kann eine solche vorzeitige Abdichtung insbesondere bei einem groß ausfallenden Rohrverbinder und einem klein ausfallenden Rohr auftreten. Eine unentdeckte, unverpresste Verbindung kann hohe Schäden bzw. Reparaturkosten verursachen, da sie erst im laufenden Betrieb der Installation ihre Dichtigkeit verliert und damit zu einem möglichen Flüssigkeitsaustritt bzw. zu einem Druckabfall im Rohrsystem führt.

Um dieses Problem zu verhindern, wurde in der DE 201 09 548 U1 ein rohrförmiges Bauteil vorgeschlagen, bei dem die Halteelemente Ausnehmungen aufweisen, so dass im unverpressten Zustand ein durchgängiger Strömungskanal zwischen dem rohrförmigen Bauteil und dem Rohr gewährleistet wird. Durch diese durchgängigen Ausnehmungen auf einer Seite des Endstücks wird die Verbindung zwischen einem Rohr und einem rohrförmigen Bauteil jedoch geschwächt, so dass die Dichtigkeit der gesamten Verbindung reduziert wird.

Aus der europäischen Patentanmeldung EP 1 775 507 A1, der den Oberbegriff von Anspruch 1 offenbart, ist ein Fitting für Rohrleitungen bekannt, welcher an seinem Anschlussstutzen umlaufende Halterippen aufweist, in welche axiale Strömungskanäle eingebracht sind. Die Strömungskanäle sind hierbei gegeneinander versetzt angeordnet.

Die europäischen Patentanmeldung EP 1 930 640 offenbart einen Fitting, welcher an seiner Stützhülse umlaufende Rippen aufweist. Die Außenflächen der Rippen verlaufen längs einer von einem Kreis abweichenden Umfangslinie. Benachbarte Rippen sind hierbei in Umfangsrichtung gegeneinander versetzt.

Der vorliegenden Erfindung liegt daher die Aufgabe zugrunde, ein rohrförmiges Bauteil zur Verfügung zu stellen, welches die obengenannten Nachteile aus dem Stand der Technik vermeidet.

Diese Aufgabe wird bei einem gattungsgemäßen rohrförmigen Bauteil erfindungsgemäß durch die Merkmale gemäß Patentanspruch 1 gelöst.

Dadurch, dass die ersten Konturbereiche mindestens zweier Halteelemente zueinander in azimutaler Richtung versetzt sind, liegen die Bereiche, in denen die Außenkontur der Halteelemente erhöht bzw. erniedrigt ist und dadurch eine lokale Schwächung der Verbindung bzw. eine lokale erhöhte Beanspruchung des Rohres verursachen, weiter voneinander entfernt und weisen eine gewisse Verteilung über den gesamten Außenumfang auf. Es ist erkannt worden, dass dadurch eine durchgehende Schwächung oder eine erhöhte Beanspruchung des Fittings in einem azimutalen Bereich verringert werden kann. Weiterhin kann auf diese Weise ein gleichmäßigerer mittlerer, d.h. über die Gesamtlänge des Endstücks gemittelter, azimutaler Verpressungsgrad des rohrförmigen Bauteils mit einem Rohr erreicht werden. Insbesondere kann auf diese Weise auch der Strömungskanal über die gesamte Länge des Endstücks verlängert werden, so dass dieser im verpressten Zustand besser abgedichtet wird.

Die Begriffe "azimutal", "axial" und "radial" sind auf die Zylinderkoordinaten bezogen, bei denen die axiale Achse der Zylinderkoordinaten mit der Mittelachse des Endstücks zusammenfällt.

Unter einer abschnittsweisen Erhöhung bzw. Erniedrigung der Außenkontur in dem ersten Konturbereich wird verstanden, dass die Außenkontur des Halteelements in diesem Konturbereich zumindest in einem Teilabschnitt einen geringeren bzw. einen größeren Abstand zur Mittelachse des Endstücks aufweist als die Außenkontur in dem zweiten Konturbereich. Auf diese Weise wird bei einer unverpressten Verbindung eines solchen rohrförmigen Bauteils mit einem Rohr ein Strömungskanal zwischen dem Halteelement und dem Rohr gewährleistet. Bei einer Erniedrigung stellt beispielsweise der erniedrigte Bereich selbst den Strömungskanal dar, bei einer Erhöhung bildet sich beispielsweise mindestens ein an die Erhöhung angrenzender Strömungskanal aus. Die Erhöhung bzw. die Erniedrigung an der höchsten bzw. niedrigsten Stelle des ersten Konturbereichs beträgt bevorzugt zwischen 0,1 und 0,9 mm, insbesondere zwischen 0,1 und 0,3 mm.

Unter dem ersten und dem zweiten Konturbereich des Halteelements werden nicht notwendigerweise körperlich voneinander abgegrenzte Bereiche verstanden, so dass die Außenkontur zwischen diesen Konturbereichen bzw. beim Übergang von einem ersten zu einem zweiten Konturbereich keine Änderung aufweisen muss. Es ist lediglich erforderlich, dass ein Teilbereich der Außenkontur im ersten Konturbereich gegenüber der Außenkontur des zweiten Konturbereichs erhöht oder erniedrigt ist. Unter dem ersten Konturbereich wird insbesondere der kleinste azimutale Bereich verstanden, in dem die jeweiligen Erhöhungen bzw. Erniedrigungen angeordnet sind.

In einer ersten bevorzugten Ausführungsform des erfindungsgemäßen rohrförmigen Bauteils sind die ersten Konturbereiche zweier benachbarter Halteelemente zueinander in azimutaler Richtung versetzt, insbesondere um einen Winkel zwischen 15 und 180° vorzugsweise um 90°. Auf diese Weise wird erreicht, dass die lokalen Schwächungen der Verbindung bzw. die lokalen Beanspruchungen des Rohres durch die Erniedrigung bzw. Erhöhung in den ersten Konturbereichen benachbarter Halteelemente weiter voneinander entfernt sind, so dass die Schwächung bzw. die erhöhte Beanspruchung besser über den gesamten Umfang des Endstücks verteilt wird. Ein Winkel zwischen 15° und 180° hat sich dabei für die Verringerung der lokaler Schwächung der Verbindung bzw. der Beanspruchung des Rohrs als besonders vorteilhaft erwiesen. Insbesondere ein Winkel von 90° ist zudem einfach zu fertigen. Die Konturbereiche zweier benachbarter Halteelemente können jeweils um einen konstanten Winkel oder um verschiedene Winkel versetzt sein. Bei einer Versetzung um einen konstanten Winkel wird eine möglichst gleichmäßige Verteilung der lokalen Schwächungen bzw. Beanspruchungen erreicht. Bei variierenden Winkeln kann eine Anpassung an spezifische Anforderungen der Verbindung erfolgen.

Die Schwächung der Verbindung oder die Beanspruchung des Rohres wird in einer weiteren bevorzugten Ausführungsform dadurch reduziert, dass die ersten Konturbereiche zweier benachbarter Halteelemente in azimutaler Richtung jeweils nicht überlappen. Auf diese Weise wird ein Mindestabstand zwischen den Konturbereichen benachbarter Halteelemente gewährleistet. Weiterhin kann auf diese Weise die Länge des Strömungskanals weiter verlängert werden.

In einer weiteren bevorzugten Ausführungsform des erfindungsgemäßen rohrförmigen Bauteils sind die ersten Konturbereiche der Halteelemente im Wesentlichen gleichmäßig über den gesamten azimutalen Winkelbereich verteilt. Diese Ausführungsform ermöglicht eine maximale Verteilung der lokalen Schwächungen der Verbindung bzw. der lokalen Beanspruchungen des Rohres durch die Erhöhungen bzw. Erniedrigungen in den ersten Konturbereichen über den gesamten Umfang des Endstücks. Auf diese Weise kann ein gleichmäßiger mittlerer azimutaler Verpressungsgrad erreicht werden.

Die ersten Konturbereiche weisen in einer weiteren bevorzugten Ausführungsform des erfindungsgemäßen rohrförmigen Bauteils eine Abflachung, eine Ausnehmung und/oder eine Erhöhung auf. Bei einer Abflachung bzw. einer Ausnehmung wird durch diese direkt ein Strömungskanal zur Verfügung gestellt. Bei einer Erhöhung bildet sich zwischen der Außenkontur und einem Rohr mindestens ein an eine Seite der Erhöhung angrenzender Strömungskanal aus. Eine Abflachung bzw. eine Ausnehmung ist insbesondere vorteilhaft bei dünnwandigen Rohren, da auf diese Weise das Rohr am wenigsten belastet wird. Eine Erhöhung ist insbesondere bei flachen Halteelementen vorteilhaft, da durch diese eine ausreichende Größe des Strömungskanals sichergestellt wird.

In einer weiteren Ausführungsform des erfindungsgemäßen rohrförmigen Bauteils sind die ersten Konturbereiche und/oder die zweiten Konturbereiche gleichartig oder verschiedenartig ausgebildet. Durch gleichartig ausgebildete Konturbereiche wird einerseits die Herstellung des rohrförmigen Bauteils vereinfacht und andererseits ein möglichst gleichmäßiger mittlerer azimutaler Verpressungsgrad über die gesamte Verbindung erreicht. Durch verschiedenartig ausgebildete Konturbereiche kann die Verbindung hingegen flexibel an das Anforderungsprofil der Verbindung angepasst werden. Zu diesem Zweck ist insbesondere bevorzugt, die ersten Konturbereiche verschiedenartig und die zweiten Konturbereiche gleichartig auszubilden. Auch eine umgekehrte Ausbildung ist denkbar.

Ein hoch gleichmäßiger Verpressungsgrad der einzelnen Halteelemente wird im erfindungsgemäßen rohrförmigen Bauteil dadurch erreicht, dass die Halteelemente eine im Wesentlichen ringförmige Außenkontur aufweisen und dass die Mittelachsen zweier benachbarter Halteelemente, vorzugsweise radial, gegeneinander versetzt sind. Durch die Versetzung der Mittelachsen weist die Außenkontur mindestens eines Halteelements eine Exzentrizität gegenüber dem Endstück des rohrförmigen Bauteils auf. Dadurch ist bei diesem Halteelement der Konturbereich, in dessen Richtung die Mittelachse verschoben ist, gegenüber dem entgegengesetzten Konturbereich erhöht. Durch die Versetzung der Mittelachse des benachbarten Halteelements sind die Konturbereiche mit einer erhöhten Außenkontur in azimutaler Richtung gegeneinander versetzt. Dadurch wird in den jeweils niedrigeren Konturbereichen der Halteelemente mindestens ein Strömungskanal zwischen dem jeweiligen Halteelement und einem Rohr gewährleistet. Der Abstand zwischen den Mittelachsen beträgt bevorzugt zwischen 0,1 und 0,9 mm, insbesondere zwischen 0,1 und 0,3 mm.

Unter der Mittelachse eines Halteelements wird die zu der Mittelachse des Endstücks parallele Achse verstanden, die durch den Mittelpunkt der Außenkontur des Halteelements verläuft.

Durch die im Wesentlichen ringförmige Außenkontur der Halteelemente wird ein möglichst gleichmäßiger Verpressungsgrad mit einem Rohr erreicht. Der gleichmäßige Verpressungsgrad kann bevorzugt dadurch verbessert werden, dass das Halteelement ohne Abflachungen, Ausnehmungen und/oder Erhebungen ausgebildet ist. Auf diese Weise wird die verpresste Verbindung auch nicht durch Ausnehmungen geschwächt bzw. das Rohr durch Erhebungen belastet.

In einer weiteren bevorzugten Ausführungsform des erfindungsgemäßen rohrförmigen Bauteils sind die Außenkonturen der Halteelemente bis auf eine azimutale und/oder radiale Versetzung im Wesentlichen gleichartig ausgebildet. Auf diese Weise wird die Herstellung der rohrförmigen Elemente vereinfacht. Weiterhin kann ein in axialer Richtung des Endstücks gleichmäßigerer mittlerer Verpressungsgrad erreicht werden.

Die Kosten für die Herstellung eines rohrförmigen Bauteils lassen sich gemäß einer weiteren Ausführungsform des erfindungsgemäßen rohrförmigen Bauteils dadurch reduzieren, dass das rohrförmige Bauteil aus einem Kunststoff ausgebildet ist. Auf diese Weise lässt sich die komplexe Struktur des Endstücks mit seinen Halteelementen ökonomisch fertigen. Insbesondere eignet sich für die Herstellung des rohrförmigen Bauteils der Kunststoffspritzguss.

Weitere Merkmale und Vorteile des erfindungsgemäßen rohrförmigen Bauteils können der nachfolgenden Beschreibung von acht Ausführungsbeispielen entnommen werden, wobei auf die beigefügte Zeichnung Bezug genommen wird.

In der Zeichnung zeigen
- Fig. 1: ein rohrförmiges Bauteil aus dem Stand der Technik,
- Fig. 2a: ein erstes Ausführungsbeispiel eines rohrförmigen Bauteils,
- Fig. 2b: einen vergrößerten Ausschnitt aus Fig. 2a,
- Fig. 3a: ein zweites Ausführungsbeispiel eines rohrförmigen Bauteils,
- Fig. 3b: einen vergrößerten Ausschnitt aus Fig. 3a,
- Fig. 4a-c: drei weitere Ausführungsbeispiele eines rohrförmigen Bauteils,
- Fig. 5: ein sechstes Ausführungsbeispiel eines rohrförmigen Bauteils,
- Fig. 6: ein siebtes Ausführungsbeispiel eines rohrförmigen Bauteils,
- Fig. 7a: ein achtes Ausführungsbeispiel eines erfindungsgemäßen rohrförmigen Bauteils und
- Fig. 7b: ein Schnitt durch ein Haltelement des achten Ausführungsbeispiels aus Fig. 7a.

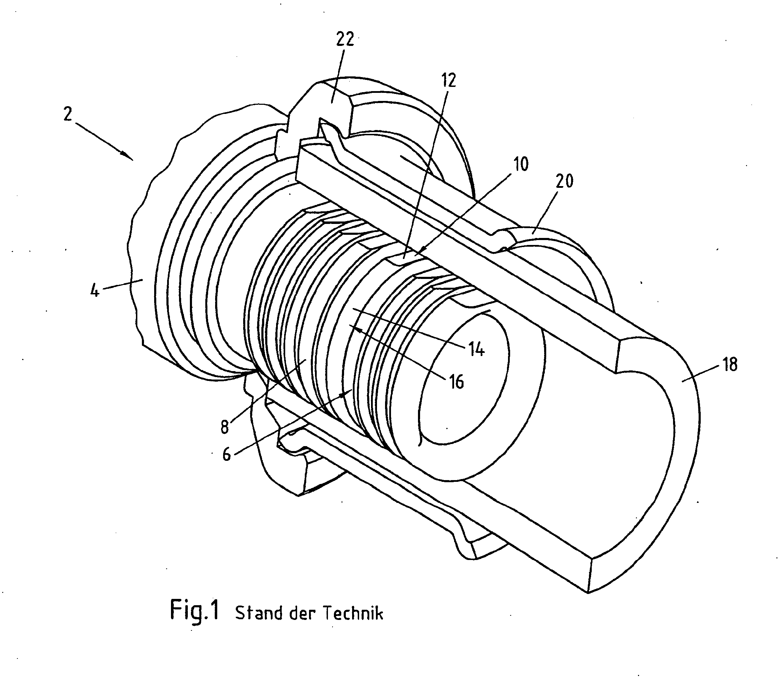

Fig. 1 zeigt ein rohrförmiges Bauteil aus dem Stand der Technik in perspektivischer Teilschnittdarstellung. Das rohrförmige Bauteil 2 weist einen Flanschbereich 4 und ein Endstück 6 mit ringförmigen Halteelementen 8 auf. Die Halteelemente 6 weisen jeweils in einem ersten azimutalen Konturbereich 10 Abflachungen 12 auf, so dass die Außenkontur 14 in dem ersten Konturbereich 10 gegenüber einem zweiten Konturbereich 16 erniedrigt ist. Die Abflachung beträgt bevorzugt zwischen 0,1 und 0,9 mm, insbesondere zwischen 0,1 und 0,3 mm. Die Abflachung kann insbesondere auch eine Krümmung aufweisen. Zur Herstellung einer Verbindung wurden ein Rohr 18 und eine Presshülse 20 über das Endstück 6 des rohrförmigen Bauteils 2 geschoben. Die Presshülse 20 ist mit einem Ring 22 axial relativ zum rohrförmigen Bauteil 2 fixiert. Die in Fig. 1 gezeigte Anordnung befindet sich in unverpresstem Zustand. Während die Außenkontur 14 der

Halteelemente 8 im zweiten Konturbereich 16 im Wesentlichen an der Innenoberfläche des Rohres 18 anliegt, ist die Außenkontur 14 des Halteelements 8 im ersten Konturbereich 10 von der Innenoberfläche des Rohres 18 abschnittsweise beabstandet, so dass in diesem Bereich zwischen den Halteelementen 8 und dem Rohr 18 ein Strömungskanal gewährleistet wird, durch den eine in dem Rohr 18 geführte Flüssigkeit hindurchfließen und somit den unverpressten Zustand der Verbindung anzeigen kann. Bei einer Verpressung der in Fig. 1 gezeigten Anordnungen aus einem rohrförmigen Bauteil 2 dem Rohr 8 und der Presshülse 10 ist die Verbindung im Bereich der Abflachungen 14 jedoch durchgängig geschwächt, sodass die Dichtigkeit und Zuverlässigkeit der gezeigten Verbindung reduziert ist.

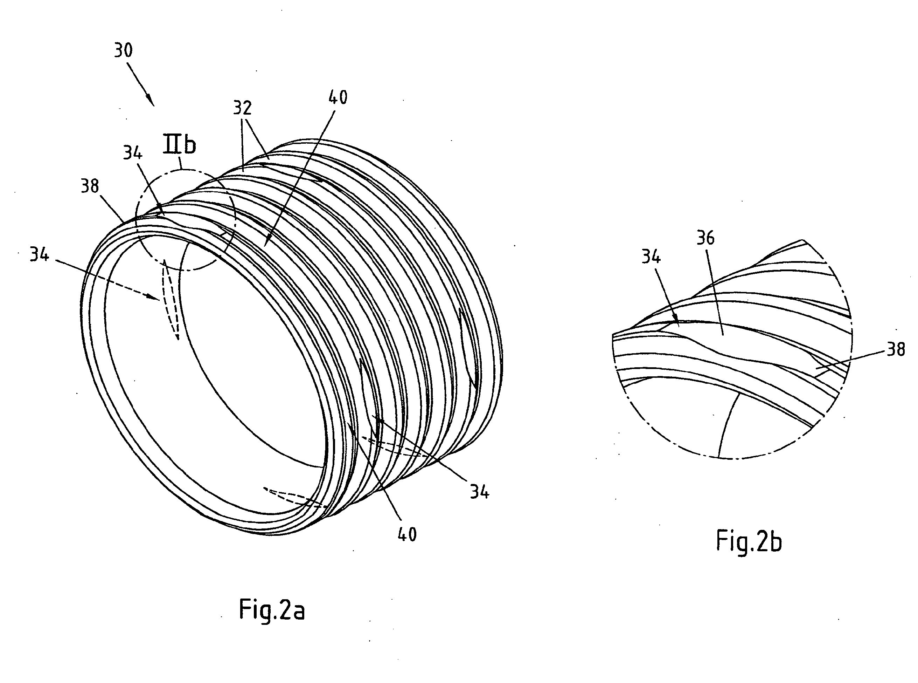

Die Figs. 2a und 2b zeigen nun ein erstes Ausführungsbeispiel eines rohrförmigen Bauteils. In Fig. 2a ist dazu der Übersicht halber lediglich das Endstück in perspektivischer Ansicht dargestellt. Der übrige Teil des rohrförmigen Bauteils kann beispielsweise wie in Fig. 1 gezeigt ausgebildet sein. Das rohrförmige Bauteil ist jedoch nicht auf diese Ausführung beschränkt. Vielmehr ist auch eine beliebige andere Ausgestaltung, beispielsweise gemäß einem aus dem Stand der Technik bekannten rohrförmigen Bauteil möglich. Fig. 2b zeigt den in Fig. 2a mit IIb gekennzeichneten Ausschnitt des Endstücks in vergrößerter Darstellung.

Das in Fig. 2a dargestellte Endstück 30 weist ein Profil aus mehreren ringförmigen Halteelementen 32 auf, welche axial in Längsrichtung des Endstücks 30 zueinander versetzt sind. Die Halteelemente 32 sind in Fig. 2a im Wesentlichen gleichartig ausgebildet und um die gleiche Strecke zueinander versetzt. Es ist jedoch beispielsweise auch möglich die Halteelemente 32 verschiedenartig auszubilden und/oder die Halteelemente 32 unterschiedlich zueinander zu versetzen. Auf diese Weise können die Halteelemente 32 flexibel an die Anforderungen des jeweiligen rohrförmigen Bauteils bzw. der damit herzustellenden Verbindung angepasst werden. Die Halteelemente 32 weisen erste Konturbereiche 34 auf, in denen Abflachungen 36 vorgesehen sind. Die Außenkontur 38 der Halteelemente 32 ist dadurch in dem ersten Konturbereich 34 gegenüber dem übrigen, als zweiten Konturbereich 40 bezeichneten, azimutalen Bereich der Halteelemente 32 erniedrigt. Anstelle der Abflachungen 36 könnten in den ersten Konturbereichen 34 beispielsweise auch Ausnehmungen vorgesehen sein. Durch die Abflachungen 36 wird gewährleistet, dass zwischen der Außenkontur 38 und einem auf das Endstück 30 aufgeschobenen Rohr ein Strömungskanal ausgebildet ist.

Die ersten Konturbereiche 34 der Halteelemente 32 sind zueinander in azimutaler Richtung versetzt. In Fig. 2a sind die ersten Konturbereiche 34 zweier benachbarter Halteelemente 32 jeweils um einen Winkel von 90° zueinander versetzt. Es sind jedoch auch andere Winkel oder verschiedene Winkel möglich. In Fig. 2a sind die ersten Konturbereiche 34 zweier benachbarter Halteelemente 32 insbesondere so angeordnet, dass die ersten Konturbereiche 34 in azimutaler Richtung nicht überlappen. Auf diese Weise wird erreicht, dass die lokale Schwächung der Verbindung bei einer Verpressung des Endstücks 30 mit einem Rohr nicht in einem einzigen azimutalen Bereich kumuliert wird, sondern sich über einen größeren Bereich, insbesondere den gesamten Umfang des Endstücks 30 verteilt.

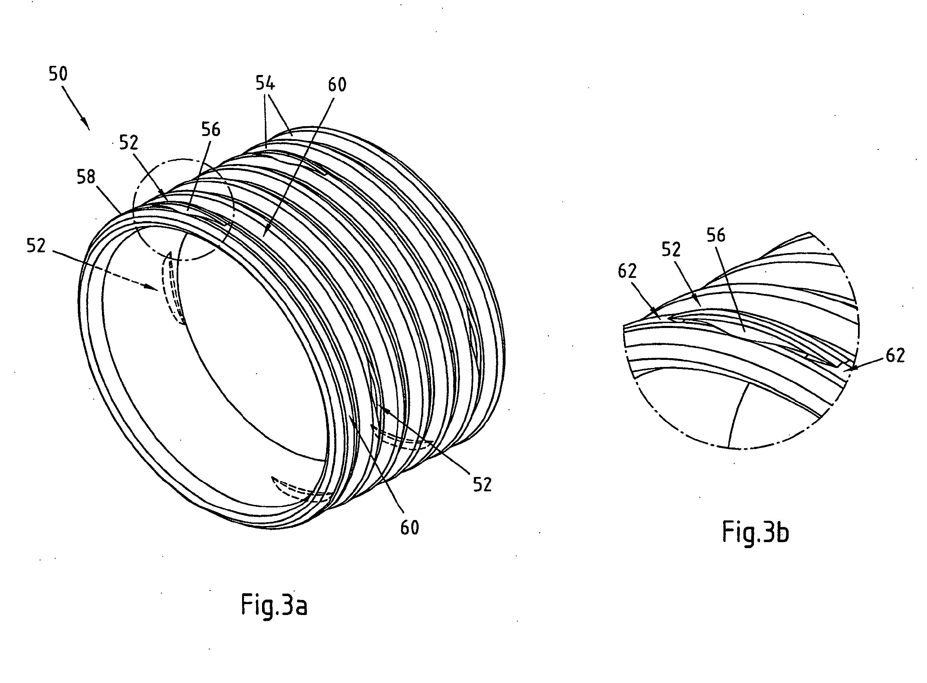

Die Figs. 3a und 3b zeigen ein zweites Ausführungsbeispiel eines rohrförmigen Bauteils in perspektivischer Ansicht, wobei der Übersicht halber in Fig. 3a nur das Endstück und in Fig. 3b der in Fig. 3a mit IIIb gekennzeichnete Ausschnitt vergrößert dargestellt wird. Das Endstück 50 unterscheidet sich von dem in Fig. 2a gezeigten Endstück 30 dadurch, dass in den ersten Konturbereichen 52 der Halteelemente 54 Erhebungen 56 anstelle von Abflachungen ausgebildet sind. Die Erhebungen weisen bevorzugt eine Höhe zwischen 0,1 und 0,9 mm, insbesondere zwischen 0,1 und 0,3 mm auf. Dadurch ist die Außenkontur 58 des jeweiligen Halteelements 54 im ersten Konturbereich 52 gegenüber dem übrigen zweiten Konturbereich 60 erhöht. Durch die Erhebungen 56 kann die Innenwand eines über das Endstück 50 geschobenen Rohres in diesem Bereich leicht geweitet werden, so dass zwischen der Innenwand des Rohres und den an die Erhebung angrenzenden Bereichen 62 ein gewisser Abstand und somit ein Strömungskanal gewährleistet wird.

Die ersten Konturbereiche 52 zweier benachbarter Halteelemente 54 sind in der Fig. 3a jeweils um 90° in azimutaler Richtung versetzt. Auf diese Weise wird die erhöhte Beanspruchung des Rohrmaterials, welche sich durch die Erhebungen 56 in den ersten Konturbereichen 52 ergibt, gleichmäßig über das gesamte Endstück 50 verteilt, sodass ein gleichmäßiger mittlerer azimutaler Verpressungsgrad über das gesamte Endstück 50 gewährleistet wird.

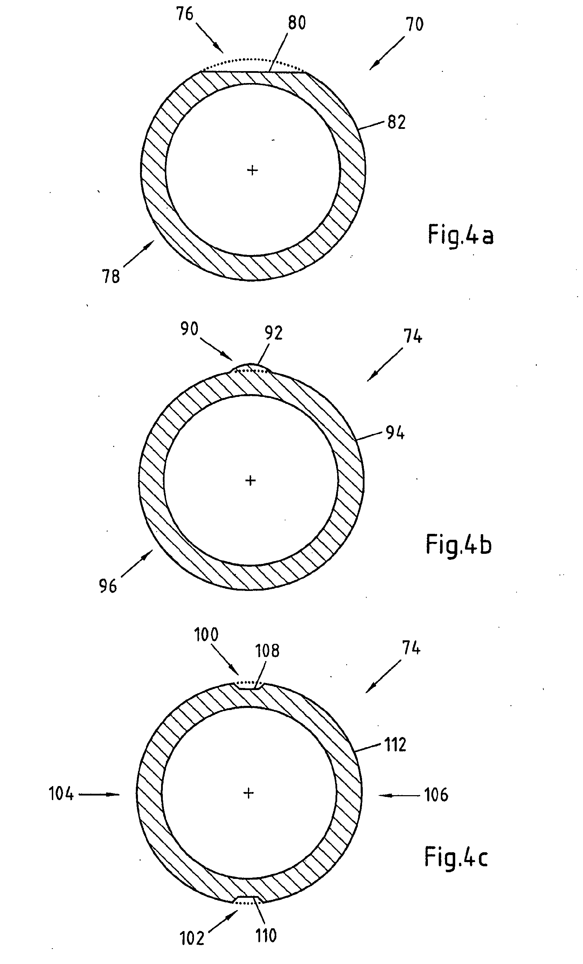

In den Figs. 4a, 4b und 4c sind Querschnitte von Halteelementen 70, 72 und 74 dreier weiterer Ausführungsbeispiele eines rohrförmigen Bauteils gezeigt.

Das Halteelement 70 in Fig. 4a weist einen ersten Konturbereich 76 und einen zweiten Konturbereich 78 auf. In dem ersten Konturbereich 76 ist eine Abflachung 80 vorgesehen, so dass die Außenkontur 82 des Halteelements 70 im ersten Konturbereich 76 gegenüber dem zweiten Konturbereich 78 erniedrigt ist. Das Halteelement 72 in Fig. 4b unterscheidet sich von dem Haltelement 70 in Fig. 4b dadurch, dass im ersten Konturbereich 90 des Halteelements 72 eine Erhebung 92 anstelle einer Abflachung vorgesehen ist. Dadurch ist die Außenkontur 94 des Halteelements 72 im ersten Konturbereich 90 gegenüber dem übrigen, zweiten Konturbereich 96 erhöht. Das in Fig. 4c dargestellte Halteelement 74 weist zwei erste Konturbereiche 100, 102 und zwei zweite Konturbereiche 104, 106 auf. In den ersten Konturbereichen 100, 102 sind Ausnehmungen 108, 110 vorgesehen, so dass die Außenkontur 112 des Halteelements 74 in den ersten Konturbereichen 100, 102 gegenüber den zweiten Konturbereichen 104, 106 erniedrigt ist. Die Ausnehmungen 108, 110 können beispielsweise durch mehrere Flächen begrenzt sein. Die aneinandergrenzenden Flächen weisen bevorzugt zueinander jeweils Winkel von weniger als 90°, insbesondere von weniger als 45° auf, um ein sicheres Abdichten der Ausnehmungen 108, 110 nach dem Verpressen der Verbindung zu gewährleisten. Die Ausnehmungen können alternativ auch durch eine oder mehrere gekrümmte Flächen begrenzt sein. Alternativ können auch mehr als zwei Ausnehmungen vorgesehen sein. Eine oder mehrere Ausnehmungen 108, 110 können insbesondere auch durch eine Abflachung oder durch eine Erhebung ersetzt sein.

Bei den zu den Halteelementen 70, 72 und 74 zugehörigen Ausführungsbeispielen des rohrförmigen Bauteils sind die ersten Konturbereiche 76, 90, 100, 102 von mindestens zwei axial versetzten Halteelementen 70, 72, 74 zueinander in azimutaler Richtung versetzt. Bei benachbarten Halteelementen mit mehreren ersten Konturbereichen sind diese bevorzugt so gegeneinander versetzt, dass jeweils alle ersten Konturbereiche jeweils gegeneinander versetzt sind. Bei dem in Fig. 4c gezeigten Halteelement 74 ist demnach eine Versetzung um 180° zu vermeiden.

Insbesondere können verschiedene Halteelemente 70, 72, 74 auch in einem einzigen Ausführungsbeispiel des rohrförmigen Bauteils kombiniert werden. Dadurch ist eine besonders flexible Anpassung an die Anforderungen der Verbindung möglich.

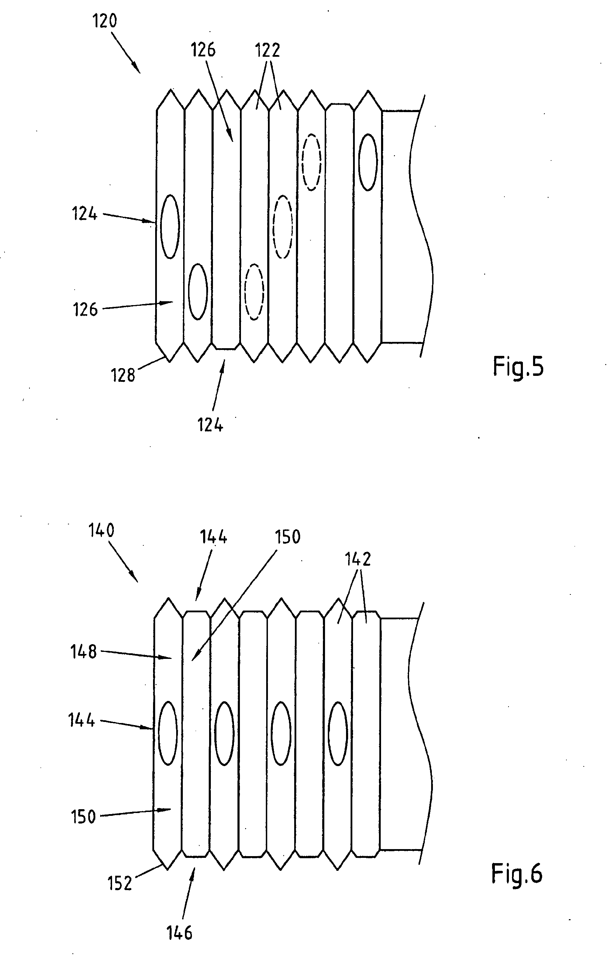

Fig. 5 zeigt ein sechstes Ausführungsbeispiel eines rohrförmigen Bauteils, wobei aus Übersichtsgründen lediglich das Endstück 120 in Draufsicht gezeigt ist. Das Endstück 120 weist Halteelemente 122 auf welche in axialer Richtung des Endstücks 120 beabstandet sind. Die Halteelemente 122 weisen jeweils erste Konturbereiche 124 und zweite Konturbereiche 126 auf. In den ersten Konturbereichen 124 ist die Außenkontur 128 der Halteelemente 122 gegenüber den zweiten Konturbereiche 126 beispielsweise durch eine Abflachung oder eine Ausnehmung erniedrigt und/oder durch eine Erhebung erhöht. Die ersten Konturbereiche 124 zweier benachbarter Halteelemente 122 sind in dem in Fig. 5 dargestellten Ausführungsbeispiel in azimutaler Richtung beispielsweise jeweils um 45° zueinander versetzt angeordnet. Auf diese

Weise wird erreicht, dass bei einer Verpressung des Endstücks 120 mit einem Rohr die Schwächung der Verbindung bzw. die Beanspruchung des Rohres über den gesamten Umfang des Endstücks verteilt wird, so dass eine sicherere Verbindung gewährleistet wird.

Fig. 6 zeigt ein siebtes Ausführungsbeispiel eines rohrförmigen Bauteils, wobei wiederum nur das Endstück 140 in Draufsicht gezeigt ist. Die in axialer Richtung des Endstücks 140 versetzten Halteelemente 142 weisen bei diesem Ausführungsbeispiel jeweils zwei erste Konturbereiche 144, 146 und zwei zweite Konturbereiche 148, 150 auf. Die ersten Konturbereiche 144, 146 sind zueinander um einen azimutalen Winkel von 180° versetzt. Es sind jedoch auch andere Winkel und/oder eine andere Zahl von ersten Konturbereichen denkbar. In den ersten Konturbereichen 144, 146 ist die Außenkontur 152 der Halteelemente 142 gegenüber den zweiten Konturbereichen 148, 150 erhöht und/oder erniedrigt. Die ersten Konturbereiche 144, 146 zweier benachbarter Halteelemente 142 sind jeweils um 90° in azimutaler Richtung versetzt angeordnet. Auf diese Weise liegt kein erster Konturbereich 144, 146 einem anderen ersten Konturbereich 144, 146 des benachbarten Halteelements 142 gegenüber. Dadurch wird eine Verteilung der Schwächung der Verbindung mit einem Rohr bzw. der Beanspruchung des Rohres über den Umfang des Endstücks 140 erreicht.

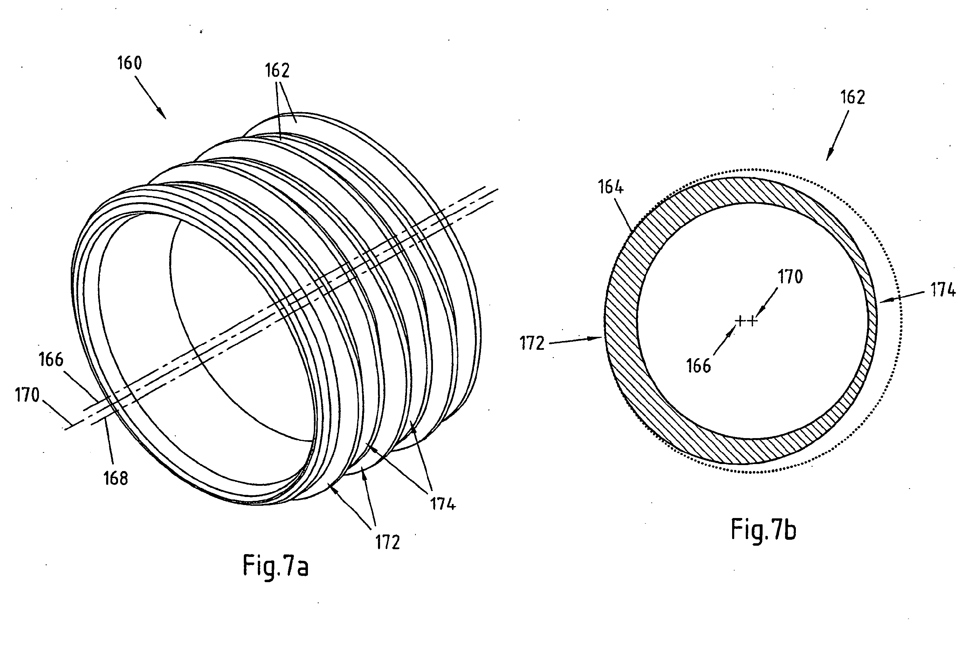

In den Fig. 7a und 7b ist ein achtes Ausführungsbeispiel eines erfindungsgemäßen rohrförmigen Bauteils dargestellt. Fig. 7a zeigt dazu eine perspektivische Ansicht des Endstücks 160 des rohrförmigen Bauteils und Fig. 7b zeigt einen Querschnitt eines der auf dem Endstück 160 vorgesehenen Halteelemente 162. Die Außenkontur 164 der Halteelemente 162 ist ringförmig ausgebildet und ihre Mittelachsen 166, 168 sind erfindungsgemäß gegeneinander und bevorzugt auch jeweils gegenüber der Mittelachse 170 des Endstücks 160 radial versetzt. Der Abstand zwischen den Mittelachsen 166, 168, 170 beträgt bevorzugt zwischen 0,1 und 0,9 mm, insbesondere zwischen 0,1 und 0,3 mm. Durch die Verschiebung der Mittelachse 166, 168 weisen die Halteelemente einen ersten Konturbereich 172 und einen zweiten Konturbereich 174 auf, wobei die Außenkontur 164 des Halteelements 162 im ersten Konturbereich 172 gegenüber dem zweiten Konturbereich 174 erhöht ist. Die ersten Konturbereiche 172 zweier benachbarter Halteelemente 162 des Endstücks 160 sind jeweils um einen azimutalen Winkel von 180° gegeneinander versetzt. Alternativ sind jedoch auch andere Winkel, beispielsweise von 90°, denkbar. Wird nun ein Rohr über das Endstück 160 geschoben, so gewährleisten die ersten Konturbereiche 172 eines ersten und eines übernächsten Halteelements 162, dass zwischen der Außenkontur 164 des dazwischen angeordneten Halteelements 162 und dem Rohr im zweiten Konturbereich 174 ein Abstand verbleibt. Auf diese Weise ist im Bereich dieses mittleren Halteelements 162 ein Strömungskanal verfügbar.

Bevorzugt kann die Verschiebung der Mittelachse der Außenkontur eines Halteelements mit dem Vorsehen einer Abflachung, einer Ausnehmung oder einer Erhöhung kombiniert werden. Auf diese Weise kann die Außenkontur der Halteelemente noch besser an die Anforderungen einer bestimmten Verbindung angepasst werden.

Für die Herstellung der rohrförmigen Bauteile ist insbesondere der Kunststoffspritzguss bevorzugt, da mit diesem das Profil des Endstücks ökonomisch und mit hinreichender Genauigkeit hergestellt werden kann. Das rohrförmige Bauteil besteht daher bevorzugt aus Kunststoff, insbesondere aus einem für den Kunststoffspritzguss geeigneten Kunststoff.

## Patentansprüche

1. Rohrförmiges Bauteil,
- mit einem ein Profil aufweisenden Endstück (30, 50, 120, 140, 160),
- wobei das Profil eine Mehrzahl axial in Längsrichtung des Endstücks (30, 50, 120, 140, 160) versetzter Halteelemente (32, 54, 76, 90, 100, 102, 124, 144, 146, 172) aufweist,
- wobei die Halteelemente (32, 54, 76, 90, 100, 102, 124, 144, 146, 172) mindestens einen ersten azimutalen Konturbereich (34, 52, 76, 90, 100, 102, 124, 144, 146, 172) und mindestens einen zweiten azimutalen Konturbereich (40, 60, 78, 96, 104, 106, 126, 148, 150, 174) aufweisen,
- wobei die Außenkontur (38, 58, 82, 94, 112, 128, 152, 164) eines Halteelements (32, 54, 76, 90, 100, 102, 124, 144, 146, 172) im ersten Konturbereich (34, 52, 76, 90, 100, 102, 124, 144, 146, 172) mindestens abschnittsweise gegenüber dem zweiten Konturbereich (40, 60, 78, 96, 104, 106, 126, 148, 150, 174) erniedrigt oder erhöht ist und
- wobei die ersten Konturbereiche (34, 52, 76, 90, 100, 102, 124, 144, 146, 172) mindestens zweier Halteelemente zueinander in azimutaler Richtung versetzt sind,
**dadurch gekennzeichnet,**
- **dass** die Halteelemente (32, 54, 76, 90, 100, 102, 124, 144, 146, 172) eine im Wesentlichen ringförmige Außenkontur (38, 58, 82, 94, 112, 128, 152, 164) aufweisen und dass die Mittelachsen (166, 168) zweier benachbarter Halteelemente (32, 54, 76, 90, 100, 102, 124, 144, 146, 172), vorzugsweise radial, gegeneinander versetzt sind.

2. Rohrförmiges Bauteil nach Anspruch 1,
**dadurch gekennzeichnet,**
**dass** die ersten Konturbereiche (34, 52, 76, 90, 100, 102, 124, 144, 146, 172) zweier benachbarter Halteelemente (32, 54, 76, 90, 100, 102, 124, 144, 146, 172) zueinander in azimutaler Richtung versetzt sind, insbesondere um einen Winkel zwischen 15 und 180°, vorzugsweise um 90°.

3. Rohrförmiges Bauteil nach Anspruch 1 oder 2,
**dadurch gekennzeichnet,**
**dass** die ersten Konturbereiche (34, 52, 76, 90, 100, 102, 124, 144, 146, 172) zweier benachbarter Halteelemente (32, 54, 76, 90, 100, 102, 124, 144, 146, 172) in azimutaler Richtung jeweils nicht überlappen.

4. Rohrförmiges Bauteil nach einem der Ansprüche 1 bis 3, **dadurch gekennzeichnet,**
**dass** die ersten Konturbereiche (34, 52, 76, 90, 100, 102, 124, 144, 146, 172) der Halteelemente (32, 54, 76, 90, 100, 102, 124, 144, 146, 172) im Wesentlichen gleichmäßig über den gesamten azimutalen Winkelbereich verteilt sind.

5. Rohrförmiges Bauteil nach einem der Ansprüche 1 bis 4, **dadurch gekennzeichnet,**
**dass** die ersten Konturbereiche (34, 52, 76, 90, 100, 102, 124, 144, 146, 172) eine Abflachung (36, 80), eine Ausnehmung (108, 110) und/oder eine Erhebung (56, 92) aufweisen.

6. Rohrförmiges Bauteil nach einem der Ansprüche 1 bis 5, **dadurch gekennzeichnet,**
**dass** die ersten Konturbereiche (34, 52, 76, 90, 100, 102, 124, 144, 146, 172) und/oder die zweiten Konturbereiche (40, 60, 78, 96, 104, 106, 126, 148, 150, 174) gleichartig oder verschiedenartig ausgebildet sind.

7. Rohrförmiges Bauteil nach einem der Ansprüche 1 bis 6, **dadurch gekennzeichnet,**
**dass** die Außenkonturen (38, 58, 82, 94, 112, 128, 152, 164) der Halteelemente (32, 54, 76, 90, 100, 102, 124, 144, 146, 172) bis auf eine azimutale und/oder radiale Versetzung im Wesentlichen gleichartig ausgebildet sind.

8. Rohrförmiges Bauteil nach einem der Ansprüche 1 bis 7, **dadurch gekennzeichnet,**
**dass** das rohrförmige Bauteil aus einem Kunststoff ausgebildet ist.

## Claims

1. A tubular component,
- with an end section (30, 50, 120, 140, 160) comprising a profile,
- wherein the profile comprises a plurality of holding elements (32, 54, 76, 90, 100, 102, 124, 144, 146, 172) axially offset in longitudinal direction of the end section (30, 50, 120, 140, 160),
- wherein the holding elements (32, 54, 76, 90, 100, 102, 124, 144, 146, 172) comprise at least one first azimuthal contour region (34, 52, 76, 90, 100, 102, 124, 144, 146, 172) and at least one second azimuthal contour region (40, 60, 78, 96, 104, 106, 126, 148, 150, 174),
- wherein the outer contour (38, 58, 82, 94, 112, 128, 152, 164) of a holding element (32, 54, 76, 90, 100, 102, 124, 144, 146, 172) in the first contour region (34, 52, 76, 90, 100, 102, 124, 144, 146, 172) at least in sections is lowered or raised relative to the second contour region (40, 60, 78, 96, 104, 106, 126, 148, 150, 174)and
- the first contour regions (34, 52, 76, 90, 100, 102, 124, 144, 146, 172) of at least two holding elements are offset relative to each other in azimuthal direction, **characterized in that**
- **in that** the holding elements (32, 54, 76, 90,100,102,124,144,146,172) comprise a substantially ring-shaped outer contour (38, 58, 82, 94, 112, 128, 152, 164) and **in that** the centre axes (166, 168) of two neighbouring holding elements (32, 54, 76, 90, 100, 102, 124, 144, 146, 172), are offset relative to each other, preferentially radially.

2. The tubular component according to Claim 1, **characterized in that** the first contour regions (34, 52, 76, 90, 100, 102, 124, 144, 146, 172) of two neighbouring holding elements (32, 54, 76, 90, 100, 102, 124, 144, 146, 172) are offset relative to one another in azimuthal direction, especially by an angle between 15 and 180º, preferably by 90º.

3. The tubular component according to Claim 1 or 2, **characterized in that** the first contour regions (34, 52, 76, 90, 100, 102, 124, 144, 146, 172) of two neighbouring holding elements (32, 54, 76, 90, 100, 102, 124, 144, 146, 172) each do not overlap in azimuthal direction.

4. The tubular component according to any one of the Claims 1 to 3, **characterized in that** the first contour regions (34, 52, 76, 90, 100, 102, 124, 144, 146, 172) of the holding elements (32, 54, 76, 90, 100, 102, 124, 144, 146, 172) are substantially distributed evenly over the entire azimuthal angular range.

5. The tubular component according to any one of the Claims 1 to 4, **characterized in that** the first contour regions (34, 52, 76, 90, 100, 102, 124, 144, 146, 172) comprise a flattening (36, 80), a clearance (108,110) and/or an elevation (56, 92).

6. The tubular component according to any one of the Claims 1 to 5, **characterized in that** the first contour regions (34, 52, 76, 90, 100, 102, 124, 144, 146, 172) and/or the second contour regions (40, 60, 78, 96, 104, 106, 126, 148, 150, 174) are designed similarly or dissimilarly.

7. The tubular component according to any one of the Claims 1 to 6, **characterized in that** the outer contours (38, 58, 82, 94, 112, 128, 152, 164) of the holding elements (32, 54, 76, 90, 100, 102, 124, 144, 146, 172) are substantially designed similarly except for an azimuthal and/or radial offset.

8. The tubular component according to any one of the Claims 1 to 7, **characterized in that** the tubular component is designed of a plastic.

## Revendications

1. Composant tubulaire
- avec une pièce finale (30, 50, 120, 140, 160) qui est pourvue d'un profil,
- sachant que le profil est doté d'une pluralité d'éléments de fixation (32, 54, 76, 90, 100, 102, 124, 144, 146, 172) qui sont décalés axialement dans la direction longitudinale de la pièce finale (30, 50, 120, 140, 160),
- sachant que les éléments de fixation (32, 54, 76, 90, 100, 102, 124, 144, 146, 172) sont doté d'au moins une première zone de contour azimutale (34, 52, 76, 90, 100, 102, 124, 144, 146, 172) et d'au moins une deuxième zone de contour azimutale (40, 60, 78, 96, 104, 106, 126, 148, 150, 174) - le contour extérieur (38, 58, 82, 94, 112, 128, 152, 164) d'un élément de fixation (32, 54, 76, 90, 100, 102, 124, 144, 146, 172) étant, au moins par sections plus bas ou plus élevé dans la première zone de contour (34, 52, 76, 90, 100, 102, 124, 144, 146, 172) que dans la deuxième zone de contour (40, 60, 78, 96, 104, 106, 126, 148, 150, 174) et
- sachant que les premières zones de contours (34, 52, 76, 90, 100, 102, 124, 144, 146, 172) d'au moins deux éléments de fixation sont décalés l'un par rapport à l'autre dans la direction azimutale,
**caractérisé en ce que**
les éléments de fixation (32, 54, 76, 90, 100, 102, 124, 144, 146, 172) sont dotés d'un contour extérieur (38, 58, 82, 94, 112, 128, 152, 164) et que les axes centraux (166, 168) de deux éléments de fixation (32, 54, 76, 90, 100, 102, 124, 144, 146, 172) sont, de préférence, décalés radialement l'un par rapport à l'autre.

2. Composant tubulaire selon la revendication 1, **caractérisé en ce que** les premières zones de contours (34, 52, 76, 90, 100, 102, 124, 144, 146, 172) de deux éléments de fixation (32, 54, 76, 90, 100, 102, 124, 144, 146, 172) voisins sont décalées les unes par rapport aux autres, dans la direction azimutale, en particulier d'un angle situé entre 15 ° et 180 °, de préférence de 90 °.

3. Composant tubulaire selon revendication 1 ou 2, **caractérisé en ce que** les premières zones de contours (34, 52, 76, 90, 100, 102, 124, 144, 146, 172) de deux éléments de fixation (32, 54, 76, 90, 100, 102, 124, 144, 146, 172) voisins ne sont respectivement pas en chevauchement dans la direction azimutale.

4. Composant tubulaire selon l'une des revendications 1 à 3, **caractérisé en ce que** les premières zones de contours (34, 52, 76, 90, 100, 102, 124, 144, 146, 172) des éléments de fixation (32, 54, 76, 90, 100, 102, 124, 144, 146, 172) sont essentiellement répartis régulièrement sur la totalité de la zone angulaire azimutale.

5. Composant tubulaire selon l'une des revendications 1 à 4, **caractérisé en ce que** les premières zones de contours (34, 52, 76, 90, 100, 102, 124, 144, 146, 172) sont dotées d'un aplatissement (36, 80), d'un évidement (108, 110) et / ou d'une élévation (56, 92).

6. Composant tubulaire selon l'une des revendications 1 à 5, **caractérisé en ce que** les premières zones de contours (34, 52, 76, 90, 100, 102, 124, 144, 146, 172) et / ou les deuxièmes zones de contours (40, 60, 78, 96, 104, 106, 126, 148, 150, 174) sont réalisés de manière similaires et / ou de manière différente.

7. Composant tubulaire selon l'une des revendications 1 à 6, **caractérisé en ce que** les contours extérieurs (38, 58, 82, 94, 112, 128, 152, 164) des éléments de fixation (32, 54, 76, 90, 100, 102, 124, 144, 146, 172) sont réalisés sensiblement de la même manière, à part un décalage azimutal et / ou radial.

8. Composant tubulaire selon l'une des revendications 1 à 7, **caractérisé en ce que** ledit composant tubulaire est réalisé en matière synthétique.
